# EUROPEAN PATENT SPECIFICATION

(11) **EP 3 752 410 B1**
(45) Date of publication and mention of the grant of the patent: **30.07.2025**
(21) Application number: 19707713.4
(22) Date of filing: 12.02.2019
(51) Int. Cl.: B62D 15/02, G08G 1/16, G06F 9/54, B60Q 9/00, H04W 4/38, H04W 4/40, H04W 12/08

(54) **AUTOMATED ACTIVATION OF A REMOTE PARKING FEATURE**
AUTOMATISCHE AKTIVIERUNG EINES ENTFERNTEN PARKHILFSMITTELS
ACTIVATION AUTOMATISÉE D'UNE FONCTION DE STATIONNEMENT À DISTANCE

(30) Priority: 16.02.2018 GB 201802510
(43) Date of publication of application: 23.12.2020
(73) Proprietor: Jaguar Land Rover Limited, Coventry, Warwickshire CV3 4LF (GB)
(72) Inventor: TODOR, Iosif, Coventry Warwickshire CV3 4LF (GB)
(74) Representative: Jaguar Land Rover Patents Department
(86) International application number: PCT/EP2019/053437
(87) International publication number: WO 2019/158527

(56) References cited:
- EP-A1- 2 905 704
- WO-A1-2014/111830
- DE-A1- 102009 019 024
- GB-A- 2 511 508
- JP-A- 2009 166 612
- US-A1- 2015 291 157
- US-A1- 2017 200 372

## Description

### TECHNICAL FIELD

The present disclosure relates to a parking system. Particularly, but not exclusively, the disclosure relates to automated activation of a remote parking feature. Aspects of the invention relate to a parking system, to a vehicle, to a device, to a computer implemented method, to a computer program product and to a computer readable medium.

### BACKGROUND

There is a desire to address the difficulty of parking vehicles in environments where the availability of space surrounding the vehicles is limited and/or changes with time. For example, in car parks, where the spaces available to a vehicle may be limited, a driver of a vehicle may park their vehicle, leave their vehicle, and on return, find that another vehicle or object has been positioned close to their vehicle in a way that impedes access through one of the access points to the vehicle.

In the event that a user of a vehicle returns to their vehicle to find that access is limited, it is known to provide remote control drive facilities in order to extract the vehicle from a parking space to another position where access to the vehicle is not impeded. However, access to vehicles in dynamic parking environments cannot reliably be predicted and a user is required to return to the vehicle, assess the situation and act, based on an assessed judgment. This is a time consuming process.

US2015/291157 relates to a method and apparatus for causing an adjustment in parking position for vehicles. GB2511508 relates to an apparatus and method for protecting a parked vehicle. DE102009019024 is seen as the closest prior art and relates to a method for preventing collisions during opening of doors of a vehicle. WO2014111830 relates to a drive assistance device for motor vehicles.

EP2905704 relates to a self-monitoring and alert system for an intelligent vehicle. US2017200372 relates to a parallel parking system. JP2009166612 relates to a parking support device.

It is an aim of the present invention to address disadvantages associated with the prior art.

### SUMMARY OF THE INVENTION

Aspects and embodiments of the invention provide a parking system, a vehicle, a device, a computer implemented method, a computer program product and a computer readable medium, as claimed in the appended claims.

According to an aspect of the invention, there is provided a parking system as described in claim 1.

According to an aspect of the disclosure, there is provided a parking system comprising: a sensor; a processor; and a transmitter; wherein: the parking system is configured to determine a distance between an object and a reference point of the parking system, in dependence of an output of the sensor, and when the determined distance between the object and the reference point of the parking system is less than a predetermined value, the parking system is configured to transmit, by the transmitter, a signal receivable at a user device of a user of the parking system, the signal indicative of a state of a vehicle to which the parking system is connectable.

According to an aspect of the disclosure, there is provided a parking system for a vehicle, the parking system comprising: sensing means; processing means; and transmitting means, wherein the sensing means is configured to determine a distance between an object and a reference point of a vehicle to which the parking system is connectable, and in dependence of an output of the sensing means, and when the determined distance between the object and the reference point is less than a predetermined value, the processing means is configured to generate a signal indicative of a state of the vehicle, and transmit that signal by the transmitting means so that the signal is receivable at a user of the parking system.

According to an aspect of the disclosure as described above, there is provided a parking system for a vehicle, wherein: said sensing means determines a distance between an object and a reference point of a vehicle to which the parking system is connectable; said processing means comprising an electronic processor having an electrical input for receiving output data from the sensing means, the data being indicative of a distance between an object and the reference point and wherein an electronic memory device electrically coupled to the electronic processor has instructions stored therein, said processing means being configured to access the memory device and execute the instructions stored therein such that in dependence of the output data from the sensing means, the processing means determines when the distance between an object and the reference point is less than a predetermined value and when the distance between the object and the reference point is less than a predetermined value, the processing means is configured to command a transmitting means to transmit a signal indicative of a state of the vehicle.

Advantageously, the parking system is configured to transmit a signal to a user device, thereby to alert a user to the need to initiate remote control drive of a vehicle to which the parking system is connectable, thereby reducing the time required to remotely move, and subsequently access, the vehicle. Beneficially, the parking system avoids the need to use subjective analysis of whether or not remote control drive/automatic relocation of the vehicle is necessary.

The signal is indicative that a user cannot access the vehicle by at least at one access point of the vehicle. Beneficially, the user is efficiently alerted to which access points cannot be used.

Optionally, the signal is indicative that a user can access the vehicle by at least at one access point of the vehicle. Beneficially, the user is efficiently alerted to which access point can be used.

Optionally, the signal is a warning state of the vehicle to which the parking system is connectable. Beneficially, the warning state enables a user to take pre-emptive action, thereby saving time.

Optionally, the signal is indicative of the clearance of an opening that will allow the user of the parking system to enter a vehicle to which the parking system is connectable. Advantageously, the signal can be used to determine accessibility of the vehicle.

Optionally, the predetermined value is in dependence of one or more properties of a user of the parking system. Advantageously, the system is configurable to take account of different user requirements such as opening height of a vehicle door, or increased door opening width requirements for wheelchair access.

Optionally, the parking system comprises receiving means, or transmitter/receiver means such as a transceiver, configured to receive a request signal from a user of the parking system. Advantageously, the system can be controlled remotely, thereby enabling improved efficiency in parking.

Optionally, the parking system is configured to transmit the signal to the user of the parking system in response to receiving a request signal from the user device. Beneficially, the user can seek information as required in order to instigate processes for accessing a vehicle, whilst avoiding inefficient power consumption.

Optionally, the parking system is configured to transmit, by the transmitting means, the signal receivable at the user device of the user of the parking system, at a predetermined time. Beneficially, the system is configurable such that the system responds to user requirements using power only when required.

Optionally, the parking system is configured to periodically transmit, by the transmitting means, the signal receivable at the user device of the user of the parking system. Advantageously, a user is regularly updated as to the status of a vehicle and the parking system consumes power as required in an optimal way.

Optionally, the parking system is configured to transmit the signal to the user device of the user of the parking system in dependence on a power mode of the vehicle to which the parking system is connectable. Advantageously, the parking system conserves power.

Optionally, the parking system is configured to determine when to transmit the signal receivable at the user device of the user of the parking system in dependence on historical data of one or more request signals. Advantageously, the parking system conserves power.

Optionally, the one or more request signals are stored in storage means, such as a database, and the parking system is configured to update the storage means in dependence on the receipt of one or more further request signals. Beneficially, the system learns user requirements to adopt the most optimal processing efficiency.

Optionally, the parking system is configured to transmit the signal receivable at the user device of a user of the parking system over a secure communication channel. Optionally, the parking system is configured to determine whether a user is authorised to instigate a predetermined action. Optionally, the predetermined action is one of: remote control drive of a vehicle to which the parking system is connectable and automatic drive of a vehicle to which the parking system is connectable. Optionally, the parking system is configured to communicate with a server storing authorisation data to determine whether a user is authorised to instigate the predetermined action. Advantageously, the integrity of the system is preserved and specific actions are available to authorised personnel.

Optionally, the sensing means is a sensor, such as an ultrasonic sensor, radar sensor, an imaging sensor, or laser based sensor.

Optionally, the parking system forms part of a telematics service for remote control of a vehicle to which the parking system is connectable.

According to another aspect of the invention, there is provided a vehicle comprising a parking system as described in claim 12.

Optionally, the vehicle is configured to automatically move from a first parked position to a second parked position when the distance between the object and the reference point is determined to be less than the predetermined value and when a user instigates a predetermined action.

Optionally, the second parked position allows sufficient clearance of one or more access points of the vehicle to be opened a required distance.

According to yet another aspect of the disclosure, there is provided a device comprising: transmitting means; receiving means; and processing means, wherein: the device is configured to transmit a control signal to a parking system for in response to receiving a signal indicative of a state of a vehicle to which the parking system is connected, thereby to instigate a predetermined action.

According to a still further aspect of the invention, there is provided a computer implemented method as described in claim 14.

According to a yet further aspect of the invention, there is provided a computer program product as described in claim 15.

According to still another aspect of the invention, there is provided a computer readable medium having stored thereon the computer program product comprising instructions which, when the program is executed by a processor, cause the processor to carry out the method for indicating a state of a vehicle, comprising: determining, at processing means, a distance between an object and a reference point of the vehicle, in dependence of an output of sensing means, and when the determined distance between the object and the reference point is less than a predetermined value, transmitting, by transmitting means, a signal receivable at a user device of a user of the parking system, the signal indicative of a state of the vehicle to which the parking system is connectable.

Within the scope of this application it is expressly intended that the various aspects, embodiments, examples and alternatives set out in the preceding paragraphs, and/or in the following description and drawings, and in particular the individual features thereof, may be taken independently or in any combination that falls within the scope of the appended claims. That is, all embodiments and/or features of any embodiment can be combined in any way and/or combination that falls within the scope of the appended claims, unless such features are incompatible.

### BRIEF DESCRIPTION OF THE DRAWINGS

One or more embodiments of the invention will now be described, by way of example only, with reference to the accompanying drawings, in which:
Figure 1 is a schematic of a vehicle comprising a parking system approaching a parking space;
Figure 2 is a schematic of the vehicle comprising the parking system parked in the parking space;
Figure 3 is a schematic of the vehicle comprising the parking system with vehicles parked in adjacent parking spaces;
Figure 4 is a schematic of the vehicle comprising the parking system exiting the parking space; and
Figure 5 is a schematic of a network 40 including the vehicle comprising the parking system.

Further aspects of the invention will be apparent from the appended description and claims.

### DETAILED DESCRIPTION

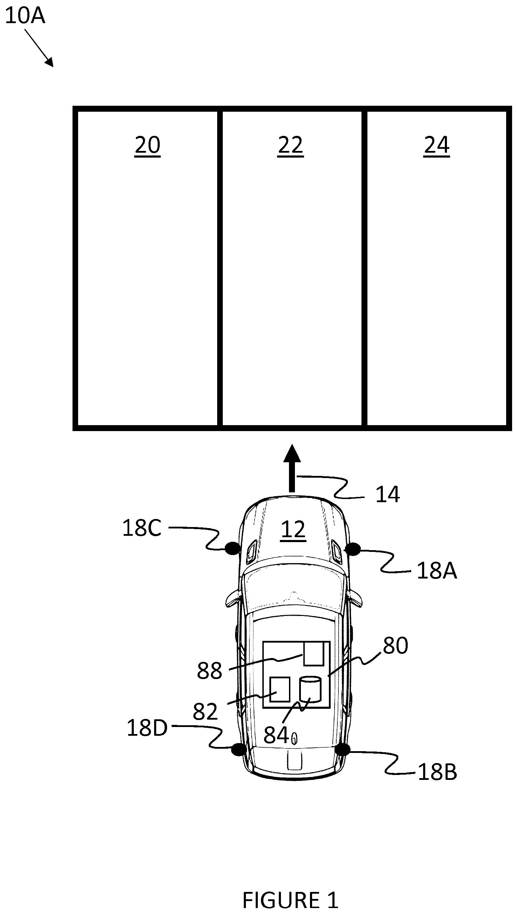

Figure 1 shows a schematic 10A of a vehicle 12 approaching a parking bay 22 of a series of adjacent parking bays 20, 22, 24. The vehicle 12 is depicted as moving in the direction of a forward arrow 14 towards the central parking bay 22 of the three adjacent parking bays 20, 22, 24.

The vehicle 12 has a parking system 80 including four sensors 18A, 18B, 18C, 18D. The parking system 80 has a processor 82, a memory 84 and a transmitter 88. The sensors 18A, 18B, 18C, 18D are in communication with the parking system 80 via wired connections (not shown). As described in detail below, with reference to Figures 1 to 5, the parking system 80 monitors information relating to the presence of objects near the sensors 18A, 18B, 18C, 18D of the vehicle 12 and transmits a signal to a user of the vehicle 12 in order to initiate one or more dependent actions.

In the example shown in Figure 1, the sensors 18A, 18B, 18C, 18D are ultrasonic sensors that determine the presence of objects in the vicinity by emitting electromagnetic energy in the form of ultrasonic acoustic waveforms and processing reflections of those waveforms at the processor 82 of the parking system 80. Each sensor 18A, 18B, 18c, 18D emits electromagnetic waves or pulses with an acoustic signature unique to the sensor and detects when those waves or pulses are reflected back from an object towards the sensor. Transmitting signatures unique to the sensor reduces the likelihood of sensor to sensor interference. It will be appreciated that other techniques are useful to mitigate against cross-channel interference. This enables the processor 82 to calculate the distance between each sensor 18A, 18B, 18C, 18D and any object that reflects the waveforms back to the sensor 18A, 18B, 18C, 18D. Information from a single sensor provides sufficient data in order to calculate an object at a distance. Information from two or more sensors can be combined in order to provide further information.

Whilst the sensors 18A, 18B, 18C, 18D are described as emitting and detecting ultrasonic waves, alternatively, or additionally, the sensors 18A, 18B, 18C, 18D may have separate components to emit and detect ultrasonic waves.

Whilst the vehicle 12 is shown to have four sensors 18A, 18B, 18C, 18D that are ultrasonic sensors, alternatively, or additionally, the sensors 18A, 18B, 18C, 18D are radar sensors, or imaging sensors, or laser-based sensors arranged to monitor or otherwise observe the area surrounding the vehicle 12.

Whilst the parking system 80 is shown to have a transmitter 88, alternatively, or additionally, the parking system 80 has a receiver 88 and/or a transceiver 88.

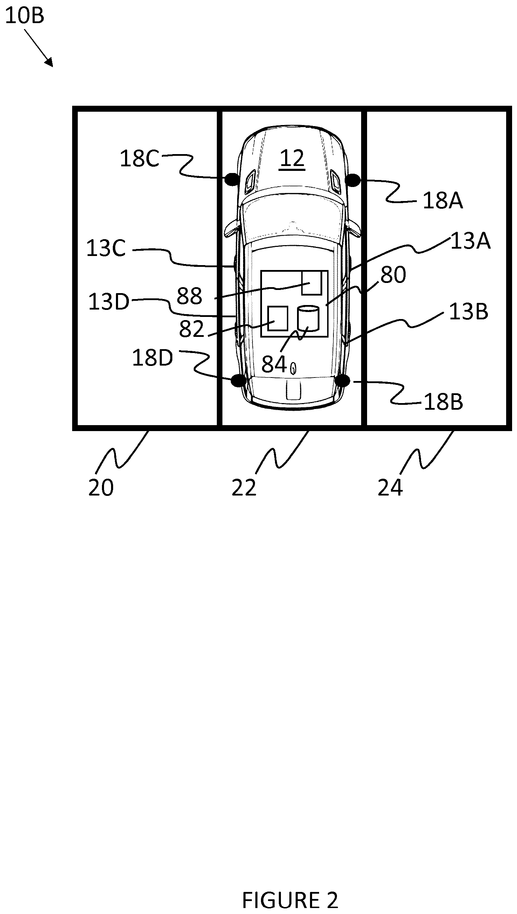

Whilst the above figures are described with reference to a driver or user entering and exiting the vehicle 12 via the door 13A, alternatively or additionally the driver or any other user may enter and exit the vehicle 12 through any of the doors 13A, 13B, 13C, 13D, as shown in Figure 2. Additionally or alternatively, the user or driver may desire to access the vehicle 12, not to an occupant compartment of the vehicle, but to a luggage compartment, for example via a tailgate, trunk or boot, or alternatively may be to access a fuel filler for a fuel tank or an electrical energy storage device via a fuel filler flap or charging port cover. Additionally or alternatively, access to a front compartment, for example an engine bay, may be desired via a vehicle hood or bonnet.

The determination by the parking system 80 as to whether access to the vehicle 12 is possible through one or more of the doors 13A, 13B, 13C, 13D is dependent on predetermined values stored in the memory 84 of the parking system 80. Alternatively, or additionally, the predetermined values are variable and depend on the user of the vehicle 12, their requirements and/or one or more characteristics of the user (e.g., height, wheel chair access, etc.).

Figure 2 shows a schematic 10B of the vehicle 12 of Figure 1 parked in the parking bay 22 of the series of adjacent parking bays 20, 22, 24. There are major entry and exit points to the vehicle 12. The entry and exit points are doors 13A, 13B, 13C, 13D, which enable one or more users, such as a driver of the vehicle 12, to access the vehicle, for example to enter and exit the vehicle 12.

In the arrangement of Figure 2, a user of the vehicle 12, such as a driver, may park the vehicle 12 in the parking bay 22. Access to the doors 13A, 13B, 13C, 13D is not impeded by objects, as the neighbouring parking bays 20, 24, are vacant. Therefore, in the example shown in Figure 2, the driver may subsequently exit the vehicle 12 via the door 13A and return at some later time. Similarly, other users of the vehicle 12 may exit the vehicle via the doors 13B, 13C, 13D and return some time later.

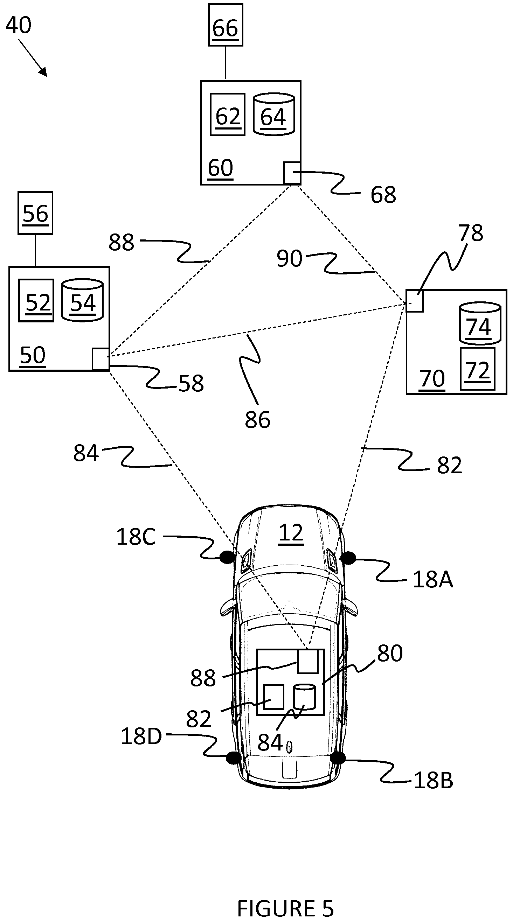

In use, once parked, the parking system 80 sends information in the form of a signal message from the vehicle 12 to a user device 50 (as shown in Figure 5) of a user. The user device 50 of a user (described below with reference to Figure 5) has a processor 52, memory 54, transceiver 58 and a display 56. The transceiver 58 of Figure 5 is shown as a single entity. Alternatively, or additionally, the transceiver 58 includes a separate transmitter and receiver. In an example, the user device 50 is a mobile device with internet access, as described with reference to Figure 5. The parking system 80 is configured to detect the presence of objects in the vicinity of the sensors 18A, 18B, 18C, 18D. If there is an object that impedes the access to the vehicle 12 through one or more of the doors 13A, 13B, 13C, 13D, then the parking system 80 alerts the user of the user device 50 that is the case. The user of the user device 50 is able to react to such information by initiating an authorisation process for manoeuvring the vehicle 12 without manually driving the vehicle 12, i.e., by remote control of the vehicle 12. Advantageously, this avoids the need for the user of the vehicle 12 to approach the vehicle 12, realise that access is impeded, enter an authorisation process to remotely control the vehicle 12 and extract the vehicle 12 from the parking bay 22 in order to access the vehicle 12. Beneficially, a driver of the vehicle 12 does not have to wait as long in order to access the vehicle 12 and drive away as they can remotely instigate the necessary authorisation process to remotely drive the vehicle 12 out of the parking bay 22.

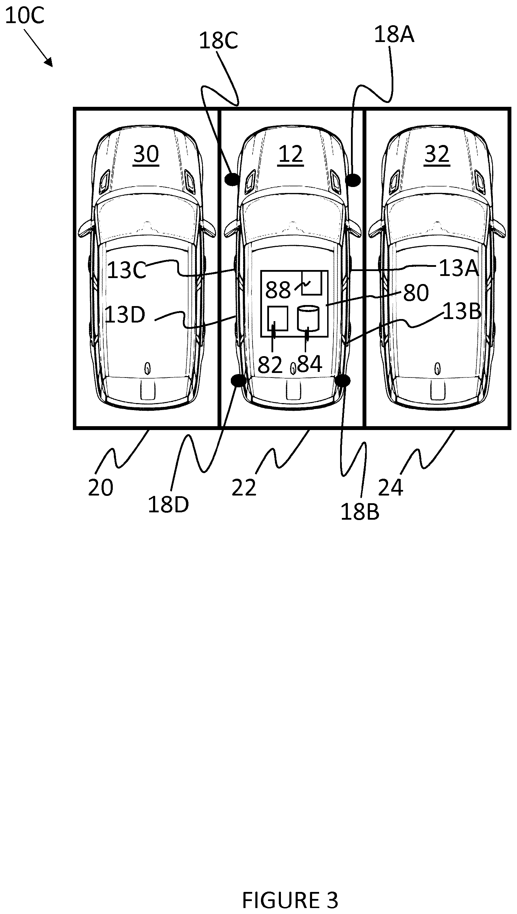

In the event that, when the driver returns to the vehicle 12, the access to the vehicle 12 is still not impeded at the driver's door 13A, the driver may simply enter the vehicle 12 and leave the parking bay 22. However, Figure 3 illustrates an example of a situation where a user may return to their vehicle 12 to find that access through one or more of the doors 13A, 13B, 13C, 13D is impeded, in this case, by the close proximity of other vehicles 30, 32 occupying neighbouring parking bays 20, 24 respectively. Figure 3 shows the vehicle 12 of Figure 2 in the same position as described above, with reference to Figure 2, i.e., parked in the central parking bay 22 of three adjacent parking bays 20, 22, 24. Figure 3 shows a schematic 10C including a further two vehicles 30, 32. There is shown a vehicle 30 parked in the left hand parking bay 20 and a vehicle 32 parked in the right hand parking bay 24. In the example of Figure 3, access to the vehicle 12 is severely limited by the objects (i.e., the vehicles 30, 32) that have been parked either side of the user's vehicle 12.

In order to determine whether or not access to the vehicle 12 is possible with or without remote control drive of the vehicle 12 to extract it from its parked position, one or more of the sensors 18A, 18B, 18C, 18D takes a measurement that is processed by the processor 82 based on instructions in the memory 84 of the parking system 80. For example, a sensor 18A emits ultrasonic waves and detects the reflection of the emitted ultrasonic waves, enabling the processor to determine, based on the properties of the reflected wave, the distance to the object which has reflected the wave, with respect to a reference object (which may be the known position of the sensor 18A).

Thus, the parking system is configured to transmit a message to a user device 50 periodically. Advantageously, since the vehicle 12 may be left for long and/or unpredictable lengths of time the parking system 80 consumes less energy as it is not required to transmit messages at a high frequency over a long period of time and the parking system 80 can revert to a sleep state from an awake state when it is not required to monitor for the presence or absences of objects in the vicinity of the vehicle 12.

Beneficially, the signal is a warning state of the vehicle 12, which alerts the user to the environmental conditions immediately near at least part of the vehicle. For example, the signal is indicative of the clearance of an opening that will allow the user of the vehicle 12 and parking system 80 to access the vehicle 12. Advantageously, the user is alerted to the possibility of restricted access to the vehicle 12 depending on one or more predefined properties, without the need to make a subjective assessment and without needing to be in sight of the vehicle 12 at the time the signal is transmitted by the parking system 80.

Beneficially, the operation of the vehicle 12 includes one or more power modes, which are indicative of the level of power that is supplied to the vehicle 12 in order to operate the various systems included in the vehicle. Optionally, the parking system 80 is configured to transmit a signal to a user device 50 dependent on one or more power modes of the vehicle. For example, the power mode of the vehicle 12 transitions from one level to a second level and when in the second level, the parking system 80 transmits a signal to the user device 50 alerting the user as to whether or not access to the vehicle is impeded and/or if it is preferable to extract the vehicle 12 from its current position in order to facilitate access to the vehicle 12. Beneficially, the parking system 80 alerts the user as to the accessibility to the vehicle 12 only when the vehicle is in a particular power mode. This means that power can otherwise be conserved, in order to provide an efficient alert system. Advantageously, multiple operations can be performed by different components of the vehicle 12 when in a particular power mode. This means that the parking system 80 can be operated at the same time as other components of the vehicle, thereby to reduce power consumption.

Alternatively, or additionally, the parking system 80 is configured to transmit a message to the user device 50 to inform the user that only remote control drive of the vehicle 12 is possible at a specified time of day (for example, in anticipation of the user of the vehicle 12 leaving a car park after work, or after visiting shops etc...). Alternatively, or additionally, the parking system 80 is configured to transmit a message to the user device 50 to inform the user that only remote control drive of the vehicle 12 is possible in response to a user request received at the receiver 88 of the parking system 80. Alternatively, or additionally, the parking system 80 is configured to transmit a message to the user device 50 to inform the user that only remote control drive of the vehicle 12 is possible based on historical data stored in the memory 84 of the parking system 80. Such historical data may be based on one or more previously made requests by a user of the parking system 80, or based on other environmental factors such as location of the vehicle 12 (e.g., if a vehicle 12 is parked in a particular car park, the parking system 80 transmits a message to the user device 50 at a certain time of day, for example, in advance of a worker leaving work). Alternatively, or additionally, the parking system 80 is configured to operate in a user selectable low power consumption mode, in which the parking system is configured to transmit the signal containing the message to the user device 50 only in response to receipt of a status request signal received from the user device 50. In this final arrangement, the parking system 80 only transmits a signal in response to a prompt from a user. The user may send a status request signal from their device 50 to the vehicle 12, either by SMS message or other suitable telecommunications protocol such as 4G. The user may send a status request to the vehicle using an application running on the device 50. The application may include suitable security protocols in order to send and receive data to a specific vehicle, either directly or via a cloud hosted server. This may be particularly useful for users with irregular schedules and may be provided as a user selectable mode of operation to help the parking system 80 conserve power as much as possible.

Advantageously, by ensuring that the parking system 80 transmits a signal to a user device 50 under particular circumstances, the power mode of different components in the vehicle 12 are optimised so that they are not powered up when they are not required, thereby saving energy.

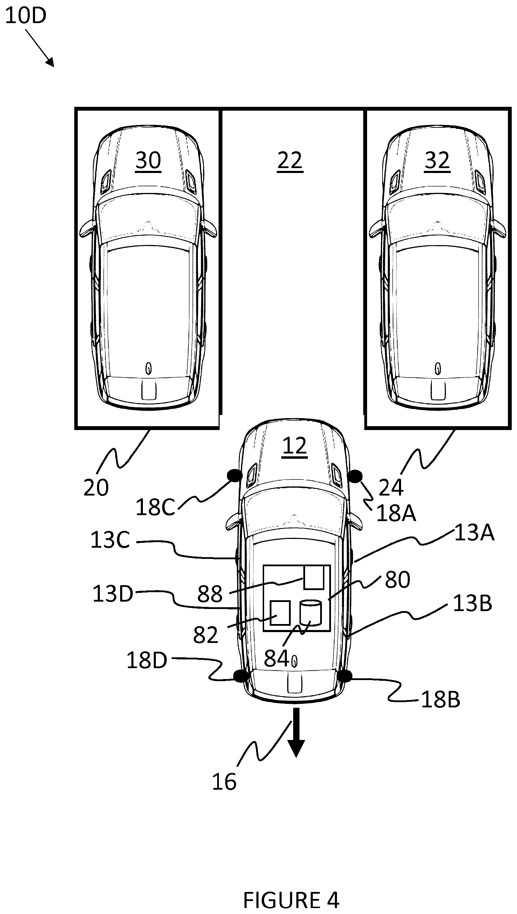

If it is determined that access to the vehicle 12 is only possible (or is preferable) by moving the vehicle 12 remotely (e.g., without manually controlling the vehicle 12 from within the vehicle 12), the user of the vehicle 12 initiates a process to remove the vehicle 12 from its parked location. Figure 4 illustrates the removal of the vehicle 12 from the parking space 22 using remote control drive. The vehicle 12 is shown to move in the direction of the backward direction arrow 16 from the parking bay 22 to a second location. At the second location, the access to the doors 13A, 13B, 13C, 13D is no longer impeded by the other vehicles 30, 32, therefore, one or more users of the vehicle 12 can access the vehicle 12 and drive it away.

Advantageously, the process for removal of the vehicle 12 from its parking bay 22 is aided by the parking system 80 as the user is not required to be in sight of the vehicle 12 in order to commence the process necessary to move the vehicle 12 from its parking bay 22 and the user is not required to make a subjective judgment on the need to move the vehicle 12 prior to entering it, thereby avoiding potentially disadvantageous circumstances that might arise by trying to access a vehicle 12 through a door 13A when there is insufficient space to do so.

Whilst the vehicle 12 is shown to be moved from the parking bay 22 in a particular manner described with reference to Figure 4, alternatively, or additionally, the vehicle 12 is removed from the location at which it is parked in the manner necessary to do so (for example, by remote control drive, or by performing an automatic manoeuvre).

Whilst the above figures are described with reference to a driver entering and exiting the vehicle 12 via the door 13A, alternatively or additionally the driver or any other user may enter and exit the vehicle 12 through any of the doors 13A, 13B, 13C, 13D. Additionally or alternatively, the user or driver may desire to access the vehicle 12, not to an occupant compartment of the vehicle, but to a luggage compartment, for example via a tailgate, trunk or boot. Additionally or alternatively, the user may require to access a fuel filler for a fuel tank or an electrical energy storage device via a fuel filler flap or charging port cover. Additionally or alternatively, access to a front compartment, for example an engine bay, may be desired via a vehicle hood or bonnet.

Figure 5 is a schematic of a network 40. The network 40 includes the vehicle 12 and parking system 80, as well as the user device 50. Further, there is a server 70 having a processor 72, memory 74 and interface 78 and there is a further computing device 60 having a processor 62, a memory 64, an interface 68 and a display 66. The parking system 80 and/or any further systems of the vehicle 12 that are not shown (such as transmission control units) are in communication with the user device 50 via communication path 84 and with the server 70 via communication path 82. For example, a transceiver 88 of the parking system 80 is in communication with the user's device 50 via an interface provided by the transceiver 58 via communication path 84 and the transceiver 88 of the parking system 80 is in communication with the interface 78 of the server 70 via communication path 82. Further, the user device 50 is in communication with the server 70 via communication path 86 between the transceiver 58 of the user device 50 and the interface 78 of the server 70. The user device 50 is also in communication with an additional computing device 60 via communication path 88 between the transceiver 58 of the user device 50 and the interface 68 of the computing device 60. The computing device 60 is in communication with the server 70 via communication path 90 between the interface 68 of the computing device 60 and the interface 78 of the server 70. The communication paths 82, 84, 86, 88, 90 are wireless communication paths, for example using Wi-Fi or 4G etc. Alternatively, or additionally, the communication paths 82, 84, 86, 88, 90 may include at least some wired portion, e.g., including Ethernet connections and connections including the internet.

The network 40 of Figure 5 is used to enable authorisation of remote control of the vehicle 12 in response to the parking system 80 indicating to a user device 50 of a user that access to the vehicle 12 is, at least in part, impeded. A user of the user device 50 registers their details at the computing device 60, which may be at a vehicle 12 retailer, for example. The details allowing authorisation may be transmitted and updated at the server 70 via the communication path 90 between the computing device 60 and the server 70. Once registered, in order to authorise use of a remote feature of the vehicle 12, the user device 50 either transmits a signal to the server 70 or to the vehicle 12, which may be in communication with the server 70, to provide authorisation to use a remote feature of the vehicle 12, such as remote control drive. Remote control drive or automatic drive of the vehicle 12 is then made over a secure connection, for example a secure Wi-Fi connection, or Bluetooth connection.

Alternative or additional configurations of the network 40 are used to instigate remote control drive or automatic drive of the vehicle 12 in response to the parking system 80 determining that access to the vehicle 12 is at least partially impeded.

Whilst the server 70 is shown without a display, alternatively, or additionally, the server 70 may have a display. Further, alternatively, or additionally, the server 70 is connected to one or more external memories or databases. Alternatively, or additionally, the network 40 contains any number of computing devices.

Whilst the parking system 80 is shown to have a transmitter 88, alternatively, or additionally, the parking system 80 has a receiver 88 and/or a transceiver 88.

Whilst the parking system 80 is described as having wired connections to each of the sensors 18A, 18B, 18C, 18D, alternatively, or additionally, the parking system 80 is in connection with the sensors 18A, 18B, 18C, 18D using wireless connections, or any combination of wired and wireless connections.

Whilst the vehicle 12 is shown to have four sensors 18A, 18B, 18C, 18D, alternatively, or additionally, the vehicle 12 has any number of sensors positioned at any location on, or in, the vehicle 12.

Whilst three parking bays 20, 22, 24 are shown in the above Figures 1, 2, 3, 4, alternatively, or additionally, there may be any number of parking bays arranged in any configuration. Whilst the parking bays 20, 22, 24 are shown as marked bays, the invention is applicable to any situation where access to a vehicle 12 is dynamically impeded.

Whilst the parking system 80 is used to inform a user of the vehicle 12 via their user device 50 that access to the vehicle 12 is impeded and remote control drive of the vehicle 12 is necessary in order to extract the vehicle 12 to a different location to enable access to the vehicle, alternatively, or additionally, in response to the parking system 80 informing a user of a user device 50 that the vehicle 12 cannot be accessed, an automatic park-out feature can be implemented by a user of the vehicle 12 and user device 50, such that the user does not have to remotely control the driving of the vehicle 12 to a position that provides access to the vehicle 12.

The parking system 80 is an integral part of the vehicle 12. However, alternatively, the parking system 80 is retrofitted to a vehicle, thereby to provide the functionality described herein.

Advantageously, the parking system 80 provides an adaptable and energy-efficient means to transmit a signal to a user device 50, thereby to warn a user that access to their vehicle 12 is at least partially impeded and to enable the user to commence the authorisation process necessary to remove the vehicle 12 from its location without entering the vehicle, thereby reducing the time taken to complete the process and eliminating the need for subjective determination of accessibility to a vehicle.

## Claims

1. A parking system (80) for indicating a state of a parked vehicle (12), the parking system comprising:
a sensor (18A, 18B, 18C, 18D);
a processor (82); and
a transmitter (88), wherein:
the sensor is configured to determine a distance between an object and a reference point of the parked vehicle to which the parking system is connectable, in dependence of an output of the sensor, and when the determined distance between the object and the reference point is less than a predetermined value, the processor is configured to generate a signal indicative that a user cannot access the parked vehicle by at least one access point (13A, 13B, 13C, 13D) of the parked vehicle and transmit that signal by the transmitter, the signal being receivable at a user device (50) of a user of the parking system.

2. The parking system of claim 1, wherein the predetermined value is in dependence of one or more properties of a user of the parking system.

3. The parking system of any preceding claim, comprising a receiver or transceiver (58) configured to receive a request signal from a user of the parking system.

4. The parking system of claim 3, wherein the parking system is configured to transmit the signal to the user of the parking system in response to receiving a request signal from the user device.

5. The parking system of any preceding claim, wherein the parking system is configured to transmit, by the transmitter, the signal receivable at the user device of the user of the parking system, at a predetermined time.

6. The parking system of any preceding claim, wherein the parking system is configured to periodically transmit, by the transmitter, the signal receivable at the user device of the user of the parking system.

7. The parking system of any preceding claim, wherein the parking system is configured to transmit the signal to the user device of the user of the parking system in dependence on a power mode of the parked vehicle to which the parking system is connectable.

8. The parking system of any preceding claim, wherein the parking system is configured to determine when to transmit the signal receivable at the user device of the user of the parking system in dependence on historical data of one or more request signals.

9. The parking system of any preceding claim, wherein the parking system is configured to transmit the signal receivable at the user device of a user of the parking system over a secure communication channel.

10. The parking system of any preceding claim, wherein the parking system is configured to determine whether a user is authorised to instigate a predetermined action.

11. The parking system of claim 10, wherein the predetermined action is one of: remote control drive of the vehicle to which the parking system is connectable and automatic drive of the vehicle to which the parking system is connectable.

12. A vehicle (12) comprising the parking system of any of claims 1 to 11.

13. The vehicle of claim 12, wherein the vehicle is configured to automatically move from a first parked position to a second parked position when the distance between the object and the reference point of the parking system is determined to be less than the predetermined value and when a user instigates a predetermined action.

14. A computer implemented method for indicating a state of a parked vehicle (12), comprising:
determining, at a processor (82), a distance between an object and a reference point of the parked vehicle to which a parking system is connectable, in dependence of an output of a sensor (18A, 18B, 18C, 18D), and when the determined distance between the object and the reference point is less than a predetermined value,
transmitting, by a transmitter (88), a signal receivable at a user device (50) of a user of the parking system, the signal indicative that a user cannot access the parked vehicle by at least one access point (13A, 13B, 13C, 13D) of the vehicle.

15. A computer program product comprising instructions which, when the program is executed by a processor, cause the processor to carry out the method of claim 14.

## Patentansprüche

1. Parksystem (80) zum Anzeigen eines Zustands eines geparkten Fahrzeugs (12), wobei das Parksystem umfasst:
einen Sensor (18A, 18B, 18C, 18D);
einen Prozessor (82) und
einen Sender (88), wobei:
der Sensor konfiguriert ist, um einen Abstand zwischen einem Objekt und einem Referenzpunkt des geparkten Fahrzeugs, mit dem das Parksystem verbindbar ist, in Abhängigkeit von einer Ausgabe des Sensors zu bestimmen, und wenn der bestimmte Abstand zwischen dem Objekt und dem Referenzpunkt kleiner als ein vorbestimmter Wert ist, der Prozessor konfiguriert ist, um ein Signal zu erzeugen, das anzeigt, dass ein Benutzer keinen Zugang zu dem geparkten Fahrzeug über mindestens einen Zugangspunkt (13A, 13B, 13C, 13D) des Fahrzeugs hat, und dieses Signal durch den Sender zu übertragen, wobei das Signal an einer Benutzervorrichtung (50) eines Benutzers des Parksystems empfangbar ist.

2. Parksystem nach Anspruch 1, wobei der vorbestimmte Wert von einer oder mehreren Eigenschaften eines Benutzers des Parksystems abhängt.

3. Parksystem nach einem der vorstehenden Ansprüche, umfassend einen Empfänger oder Transceiver (58), der konfiguriert ist, um ein Anforderungssignal von einem Benutzer des Parksystems zu empfangen.

4. Parksystem nach Anspruch 3, wobei das Parksystem konfiguriert ist, um das Signal an den Benutzer des Parksystems als Reaktion auf das Empfangen eines Anforderungssignals von der Benutzervorrichtung zu senden.

5. Parksystem nach einem der vorstehenden Ansprüche, wobei das Parksystem konfiguriert ist, um, durch den Sender, das Signal, das an der Benutzervorrichtung des Benutzers des Parksystems empfangen werden kann, zu einer vorbestimmten Zeit zu senden.

6. Parksystem nach einem der vorstehenden Ansprüche, wobei das Parksystem konfiguriert ist, um, durch den Sender, das Signal, das an der Benutzervorrichtung des Benutzers des Parksystems empfangen werden kann, periodisch zu senden.

7. Parksystem nach einem der vorstehenden Ansprüche, wobei das Parksystem konfiguriert ist, um das Signal an die Benutzervorrichtung des Benutzers des Parksystems in Abhängigkeit von einem Leistungsmodus des geparkten Fahrzeugs, mit dem das Parksystem verbindbar ist, zu senden.

8. Parksystem nach einem der vorstehenden Ansprüche, wobei das Parksystem konfiguriert ist, um in Abhängigkeit von historischen Daten eines oder mehrerer Anforderungssignale zu bestimmen, wann das an der Benutzervorrichtung des Benutzers des Parksystems empfangbare Signal gesendet werden soll.

9. Parksystem nach einem der vorstehenden Ansprüche, wobei das Parksystem konfiguriert ist, um das an der Benutzervorrichtung eines Benutzers des Parksystems empfangbare Signal über einen sicheren Kommunikationskanal zu senden.

10. Parksystem nach einem der vorstehenden Ansprüche, wobei das Parksystem konfiguriert ist, um zu bestimmen, ob ein Benutzer berechtigt ist, eine vorbestimmte Aktion einzuleiten.

11. Parksystem nach Anspruch 10, wobei die vorbestimmte Aktion eine der folgenden ist: ferngesteuertes Fahren des Fahrzeugs, mit dem das Parksystem verbindbar ist, und automatisches Fahren des Fahrzeugs, mit dem das Parksystem verbindbar ist.

12. Fahrzeug (12), umfassend das Parksystem nach einem der Ansprüche 1 bis 11.

13. Fahrzeug nach Anspruch 12, wobei das Fahrzeug konfiguriert ist, um sich automatisch von einer ersten geparkten Position zu einer zweiten geparkten Position zu bewegen, wenn der Abstand zwischen dem Objekt und dem Referenzpunkt des Parksystems als kleiner als der vorbestimmte Wert bestimmt wird und wenn ein Benutzer eine vorbestimmte Aktion einleitet.

14. Computerimplementiertes Verfahren zum Anzeigen eines Zustands eines geparkten Fahrzeugs (12), umfassend:
Bestimmen, auf einem Prozessor (82), eines Abstands zwischen einem Objekt und einem Referenzpunkt des geparkten Fahrzeugs, mit dem ein Parksystem verbindbar ist, in Abhängigkeit von einer Ausgabe eines Sensors (18A, 18B, 18C, 18D), und wenn der bestimmte Abstand zwischen dem Objekt und dem Referenzpunkt kleiner als ein vorbestimmter Wert ist,
Senden, durch einen Sender (88), eines Signals, das an einer Benutzervorrichtung (50) eines Benutzers des Parksystems empfangbar ist, wobei das Signal anzeigt, dass ein Benutzer keinen Zugang zu dem geparkten Fahrzeug über mindestens einen Zugangspunkt (13A, 13B, 13C, 13D) des Fahrzeugs hat.

15. Computerprogrammprodukt, das Anweisungen umfasst, die, wenn das Programm von einem Prozessor ausgeführt wird, den Prozessor veranlassen, das Verfahren nach Anspruch 14 auszuführen.

## Revendications

1. Système de stationnement (80) permettant d'indiquer un état d'un véhicule stationné (12), le système de stationnement comprenant :
un capteur (18A, 18B, 18C, 18D) ;
un processeur (82) ; et
un émetteur (88), dans lequel :
le capteur est configuré pour déterminer une distance entre un objet et un point de référence du véhicule stationné auquel le système de stationnement peut être connecté, en fonction d'une sortie du capteur, et lorsque la distance déterminée entre l'objet et le point de référence est inférieure à une valeur prédéterminée, le processeur est configuré pour générer un signal indiquant qu'un utilisateur ne peut pas accéder au véhicule stationné par au moins un point d'accès (13A, 13B, 13C, 13D) du véhicule stationné et émettre ce signal par l'émetteur, le signal pouvant être reçu par un dispositif utilisateur (50) d'un utilisateur du système de stationnement.

2. Système de stationnement selon la revendication 1, dans lequel la valeur prédéterminée dépend d'une ou de plusieurs propriétés d'un utilisateur du système de stationnement.

3. Système de stationnement selon l'une quelconque revendication précédente, comprenant un récepteur ou un émetteur-récepteur (58) configuré pour recevoir un signal de demande provenant d'un utilisateur du système de stationnement.

4. Système de stationnement selon la revendication 3, dans lequel le système de stationnement est configuré pour transmettre le signal à l'utilisateur du système de stationnement en réponse à la réception d'un signal de demande provenant du dispositif utilisateur.

5. Système de stationnement selon l'une quelconque revendication précédente, dans lequel le système de stationnement est configuré pour émettre, par l'émetteur, le signal pouvant être reçu par le dispositif utilisateur de l'utilisateur du système de stationnement, à un moment prédéterminé.

6. Système de stationnement selon l'une quelconque revendication précédente, dans lequel le système de stationnement est configuré pour émettre périodiquement, par l'émetteur, le signal pouvant être reçu par le dispositif utilisateur de l'utilisateur du système de stationnement.

7. Système de stationnement selon l'une quelconque revendication précédente, dans lequel le système de stationnement est configuré pour transmettre le signal au dispositif utilisateur de l'utilisateur du système de stationnement en fonction d'un mode d'alimentation du véhicule stationné auquel le système de stationnement peut être connecté.

8. Système de stationnement selon l'une quelconque revendication précédente, dans lequel le système de stationnement est configuré pour déterminer quand transmettre le signal pouvant être reçu par le dispositif utilisateur de l'utilisateur du système de stationnement en fonction des données historiques d'un ou de plusieurs signaux de demande.

9. Système de stationnement selon l'une quelconque revendication précédente, dans lequel le système de stationnement est configuré pour transmettre le signal pouvant être reçu par le dispositif utilisateur d'un utilisateur du système de stationnement sur un canal de communication sécurisé.

10. Système de stationnement selon l'une quelconque revendication précédente, dans lequel le système de stationnement est configuré pour déterminer si un utilisateur est autorisé à lancer une action prédéterminée.

11. Système de stationnement selon la revendication 10, dans lequel l'action prédéterminée est l'une parmi : la conduite télécommandée du véhicule auquel le système de stationnement peut être connecté et la conduite automatique du véhicule auquel le système de stationnement peut être connecté.

12. Véhicule (12) comprenant le système de stationnement selon l'une quelconque des revendications 1 à 11.

13. Véhicule selon la revendication 12, dans lequel le véhicule est configuré pour se déplacer automatiquement d'une première position de stationnement à une seconde position de stationnement lorsque la distance entre l'objet et le point de référence du système de stationnement est déterminée comme étant inférieure à la valeur prédéterminée et lorsqu'un utilisateur lance une action prédéterminée.

14. Procédé mis en œuvre par ordinateur permettant d'indiquer un état d'un véhicule stationné (12), comprenant :
la détermination, au niveau d'un processeur (82), d'une distance entre un objet et un point de référence du véhicule stationné auquel un système de stationnement peut être connecté, en fonction d'une sortie d'un capteur (18A, 18B, 18C, 18D), et lorsque la distance déterminée entre l'objet et le point de référence est inférieure à une valeur prédéterminée,
l'émission, par un émetteur (88), d'un signal pouvant être reçu par un dispositif utilisateur (50) d'un utilisateur du système de stationnement, le signal indiquant qu'un utilisateur ne peut pas accéder au véhicule stationné par au moins un point d'accès (13A, 13B, 13C, 13D) du véhicule.

15. Produit programme informatique comprenant des instructions qui, lorsque le programme est exécuté par un processeur, amènent le processeur à réaliser le procédé selon la revendication 14.
